# EUROPÄISCHE PATENTSCHRIFT

(11) **EP 1 016 795 B1**
(45) Veröffentlichungstag und Bekanntmachung des Hinweises auf die Patenterteilung: **01.03.2006**
(21) Anmeldenummer: 99811147.0
(22) Anmeldetag: 13.12.1999
(51) Int. Cl.: F16B 27/00, F16B 15/08

(54) **Gurtartiges Magazin für Befestigungselemente**
Belt type magazine for fastening elements
Magasin en forme de bande pour éléments de fixation

(30) Priorität: 29.12.1998 DE 19860667
(43) Veröffentlichungstag der Anmeldung: 05.07.2000
(73) Patentinhaber: HILTI Aktiengesellschaft, 9494 Schaan (LI)
(72) Erfinder: Daubinger, Gerd, 80935 München (DE); van Egeraat, Hendrik A., 700 02 Örebro (SE)
(74) Vertreter: Wildi, Roland

(56) Entgegenhaltungen:
- EP-A- 0 053 828
- US-A- 5 110 247
- PATENT ABSTRACTS OF JAPAN vol. 1995, no. 11, 26. Dezember 1995 (1995-12-26) -& JP 07 217620 A (MURATA MACH LTD), 15. August 1995 (1995-08-15)

## Beschreibung

Die Erfindung betrifft einen der Aufnahme von Befestigungselementen dienenden Trägerstreifen gemäss dem Oberbegriff des Patentanspruches 1.

Für die Zuführung von nagelförmigen Befestigungselementen in handgeführte Geräte, mit denen die Befestigungselemente in einen Untergrund eingetrieben werden, sind Trägerstreifen bekannt, die sich aus mehreren hintereinander angeordneten, miteinander verbundenen Aufnahmekörpern zusammensetzen in denen jeweils ein Befestigungselement koaxial zu einer Aufnahmeöffnung des Aufnahmekörpers angeordnet ist.

Aus der CH-588 926 ist beispielsweise ein pulverkraftbetriebenes Setzgerät bekannt, in dem ein derartiger Trägerstreifen Anwendung findet. Der Trägerstreifen ist in ein Magazin einsetzbar, das in bezug auf eine Längsachse einer im setzrichtungsseitigen Bereich eines Setzgerätes angeordneten Befestigungselementeführung senkrecht von dieser abragt. Aufgrund dieser Anordnung des Magazins ist die Zugänglichkeit zu den einzelnen Befestigungspunkten stark beeinträchtigt.

Die EP053828 offenbart einen Trägerstreifen mit mehreren jeweils eine Aufnahmeöffnung aufweisenden, ringförmigen Aufnahmekörpern, die hintereinander angeordnet sowie miteinander verbunden sind und der Aufnahme jeweils eines einen Kopf und einen Schaft aufweisenden Befestigungselementes dienen, wobei je zwei einander benachbarte Aufnahmekörper in einer parallel zu der Längsachse der Aufnahmeöffnung verlaufenden Richtung zueinander versetzt angeordnet sind.

Der Erfindung liegt die Aufgabe zugrunde, einen Trägerstreifen zu schaffen, der leicht mit Befestigungselementen bestückbar ist und aus dem die Befestigungselemente leicht ausstossbar sind sowie unter einem die Zugänglichkeit zu den Befestigungspunkten verbesserndem Winkel der Befestigungselementeführung zuführbar sind.

Die Lösung der Aufgabe erfolgt durch einen Trägerstreifen, der die im kennzeichnenden Abschnitt des Patentanspruchs 1 oder 6 angeführten Merkmale aufweist.

Aufgrund der erfindungsgemässen Ausgestaltung lässt sich der Trägerstreifen unter einem spitzen Winkel der Befestigungselementeführung zuführen, wobei die Längs-achsen der Befestigungselemente parallel zur Längserstreckung der Befestigungselementeführung verlaufen.
Der Versatz einander benachbarter Aufnahmekörper hängt ab von dem Winkel unter dem das Magazin von der Befestigungselementeführung abragt Vorzugsweise entspricht der Versatz dem 0,02- bis 0,2-fachen Abstand zwischen den Längsachsen von zwei einander benachbarten Aufnahmekörpern.

Eine grosse Auflagefläche des Trägerstreifens auf einer ersten Seite des Trägerstreifens wird vorteilhafterweise dadurch erreicht, dass eine erste Stirnseite jedes Aufnahmekörpers auf einer ersten Seite des Trägerstreifens in einer einzigen Ebene, die zu den Längsachsen der Aufnahmeöffnungen unter einem Winkel von 60°bis 98° verläuft.

Wie bereits erwähnt, dient jede der Aufnahmekammern der Aufnahme und der Führung eines beispielsweise als Schraube ausgebildeten Befestigungselementes. Jedes der Befestigungselemente durchsetzt mit seinem Schaft die Aufnahmeöffnung des Aufnahmekörpers und liegt mit seinem Kopf auf der ersten Stirnseite des Aufnahmekörpers auf. Der axialen Festlegung dieses Befestigungselementes in der Aufnahmekammer dient zweckmässigerweise wenigstens ein Rückhalteelement, das von einer der ersten Stirnseite gegenüberliegenden zweiten Stirnseite jedes Aufnahmekörpers abragt, das eine von der zweiten Stirnseite axial um den Abstand beabstandete, dieser zugewandte und in die Axialprojektion der lichten Weite der Aufnahmeöffnung ragende Rückhaltefläche aufweist.

Damit ein axiales Festlegen des Befestigungselementes in dem Aufnahmekörper ohne Spiel erreicht werden kann, ist der Abstand zwischen der Rückhaltefläche und der zweiten Stirnseite auf die parallel zur Längsachse des Befestigungselementes gemessene Höhe des Kopfes des Befestigungselementes abgestimmt. Vorzugsweise entspricht der Abstand dem 0,02- bis 0,2-fachen Abstand zwischen den Längsachsen von zwei einander benachbarten Aufnahmekörpern.

Eine besonders gute Führung der in dem Trägerstreifen angeordneten Befestigungselemente wird zweckmässigerweise mit zwei einander diametral gegenüberliegenden Rückhalteelementen erreicht. Diese Rückhalteelemente sind beispielsweise in bezug auf eine Mittellängsachse des Trägerstreifens seitlich versetzt angeordnet. Die grösste Erstreckung dieser Rückhalteelemente verläuft beispielsweise parallel zur Längserstreckung des Trägerstreifens.

Vorzugsweise sind die Aufnahmekörper im wesentlichen ovalförmig ausgebildet, wobei sich der grösste Durchmesser in einer parallel zur Längserstreckung des Trägerstreifens verlaufenden Richtung erstreckt. Dieser grösste Durchmesser entspricht beispielsweise dem Durchmesser des Kopfes des in dem Trägerstreifen angeordneten Befestigungselementes. Daraus ergibt sich, dass die in dem Trägerstreifen angeordneten Befestigungselemente mit ihrem Kopf nicht in die Aufnahmeöffnung der Aufnahmekörper ragen, sondern auf zwei Abschnitten der zweiten Stirnseite der Aufnahmekörper aufliegen auf die später noch näher eingegangen wird. Der axialen Festlegung der Befestigungselemente in den Aufnahmekörpern dienen die bereits erwähnten Rückhalteelemente mit ihren den Kopf der Schraube teilweise hintergreifenden Rückhalteflächen.

Die sich zwischen der zweiten Stirnseite und der Rückhaltefläche erstreckende Innenkontur des Rückhalteelementes fluchtet im wesentlichen mit der Innenkontur des Aufnahmekörpers und bewirkt beim Einsetzen der Befestigungelemente in den Trägerstreifen ein radiales Aufweiten der entsprechenden Aufnahmekammern, so dass diese schlussendlich eine im wesentlichen kreisrunde Form aufweisen. Aufgeweitet werden diese Aufnahmekammern deshalb, weil sich die Innenkontur der Rückhalteelemente an der Aussenkontur des Kopfes der Befestigungselemente abstützt.

Die axiale Abstützung der Befestigungselemente in Setzrichtung erfolgt somit nur über die im Verbindungsbereich der einzelnen Aufnahmekammern liegenden Abschnitte der zweiten Stirnseite. Im Bereich der Rückhalteelemente liegt der Kopf des Befestigungselementes nicht auf der zweiten Stirnseite auf.

Eine Entnahme der Befestigungselemente aus dem Trägerstreifen erfolgt mit einem Werkzeug, das mit dem Gerät in Verbindung steht und mit dessen Hilfe das Befestigungselement in einen Untergrund eintreibbar ist. Beim Aufbringen einer Anpresskraft auf das Gerät, drückt das Werkzeug auf den Kopf des Befestigungselementes. Bei ausreichender Anpresskraft wird der entsprechende Aufnahmekörper im Verbindungsbereich der Aufnahmekörper radial aufgeweitet, so dass die Abschnitte der zweiten Stirnseite nicht mehr in die axiale Projektionsfläche des Kopfes ragen.

Damit der Trägerstreifen so kurz wie möglich ausgebildet werden kann, ist vorzugsweise der grösste Durchmesser des Aufnahmekörpers grösser, als der Abstand zwischen zwei Längsachsen benachbarter Aufnahmekörper. Bei dieser erfindungsgemässen Ausgestaltung überlappen sich die Köpfe der in dem Trägerstreifen angeordneten Befestigungselemente teilweise, so dass die Entnahme der einzelnen Befestigungselemente aus dem Trägerstreifen nur nacheinander erfolgen kann, wenn das darunterliegende Befestigungselement entfernt worden ist. Der Versatz der einander benachbarten Aufnahmekörper zueinander entspricht wenigstens der Höhe des Kopfes eines Befestigungselementes.

Aus herstelltechnischen Gründen erstreckt sich vorteilhafterweise im Verbindungsbereich zweier benachbarter Aufnahmekörper von der zweiten Stirnseite eines ersten Aufnahmekörpers eine Ausnehmung bis zur zweiten Stirnseite eines zweiten benachbarten Aufnahmekörpers, der gegenüber dem ersten Aufnahmekörper in einer parallel zu den Längsachsen der Aufnahmeöffnung verlaufenden Richtung versetzt ist.

Zweckmässigerweise bilden der Trägerstreifen und die in dem Trägerstreifen gehalterten, einen Schaft und einen Kopf aufweisenden Befestigungselemente ein schnell und einfach in Setzgeräte einsetzbares Nagelmagazin.

Die Erfindung wird anhand von Zeichnungen, die ein Ausführungsbeispiel wiedergeben, näher erläutert. Es zeigen:
- Fig.1: einen erfindungsgemässen Trägerstreifen in geschnittener Darstellung;
- Fg. 2: den Trägerstreifen gemäss Fig. 1 in der Draufsicht;
- Fg.3: ein erfindungsgemässes Nagelmagazin mit einem geschnitten dargestellten Trägerstreifen und mehreren Befestigungselementen;
- Fig. 4: das Nagelmagazin gemäss Fig. 3 in der Draufsicht.

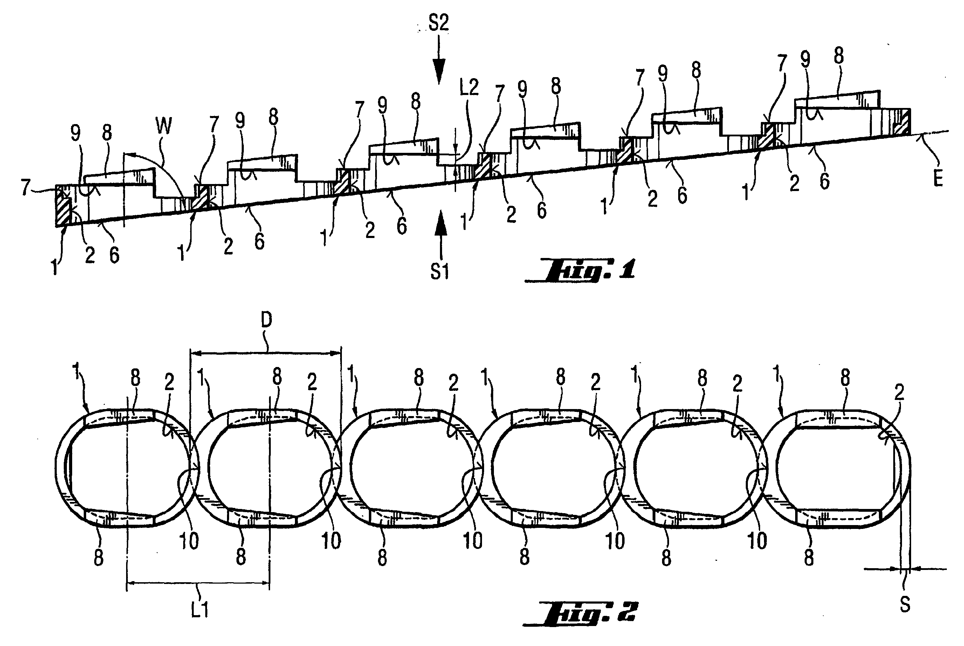

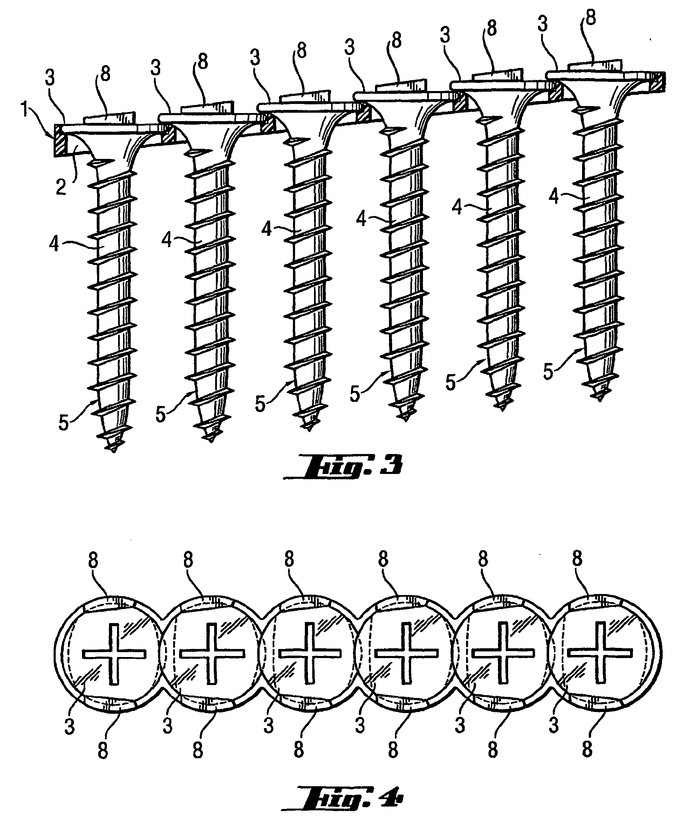

Der in den Fig. 1 und 2 dargestellte Trägerstreifen setzt sich aus mehreren jeweils eine Aufnahmeöffnung 2 aufweisenden ringförmigen Aufnahmekörpern 1 zusammen. Die einzelnen Aufnahmekörper 1 sind in einer Reihe hintereinander angeordnet und miteinander verbunden. Jeder dieser Aufnahmekörper 1 dient der Aufnahme eines Befestigungselementes 5 und weist eine erste Stirnseite 6 und eine zweite Stirnseite 7 auf.

Jene Seite des Trägerstreifens auf dem alle Stirnseiten 6 angeordnet sind wird als erste Seite S1 und jene Seite des Trägerstreifens auf dem alle Stirnseiten 7 angeordnet sind wird als zweite Seite S2 bezeichnet. Sämtliche erste Stirnseiten 6 verlaufen gegenüber einer Längsachse jeder Aufnahmekammer unter einem Winkel W und alle ersten Stirnseiten 6 liegen in einer einzigen Ebene E.

Von der zweiten Stirnseite 7 jedes Aufnahmekörpers 1 ragen zwei einander diametral gegenüberliegenden Rückhalteelemente 8 ab. Jedes dieser Rückhalteelemente 8 ist gegenüber einer Längsachse des Trägerstreifens seitlich versetzt angeordnet und weist eine Rückhaltefläche 9 auf, deren grösste Erstreckung parallel zur Längsachse des Trägerstreifens verläuft. Die Rückhaltefläche 9 ist der zweiten Stirnseite 7 zugewandt, von dieser beabstandet angeordnet und ragt in die Axialprojektion der lichten Weite der Aufnahmeöffnung 2.

Wie die Fig. 2 zeigt, weist jeder Aufnahmekörper 1 eine ovale Form auf, wobei die grösste Erstreckung der Aufnahmekörper 1 parallel zur Längserstreckung des Trägerstreifens verläuft. Jener Abschnitt des Rückhalteelementes 8 zwischen der zweiten Stirnseite 7 und der Rückhaltefläche 9 weist eine der Aufnahmeöffnung 2 zugewandte Innenkontur auf, die sich im wesentlichen parallel zur Innenkontur des angrenzenden Abschnittes des Aufnahmekörpers 1 erstreckt. Der Abstand L1 zwischen zwei Längsachsen zweier benachbarter Aufnahmekörper 1 ist kleiner als der grösste parallel zur Längserstreckung des Trägerstreifens erstreckende Aussendurchmesser D jedes Aufnahmekörpers 1. Die kleinste Wandstärke des Aufnahmekörpers 1 ist mit S bezeichnet.

Im Verbindungsbereich zweier benachbarter Aufnahmekörper erstreckt sich von der zweiten Stirnseite 7 eines ersten Aufnahmekörpers 1 eine Ausnehmung 10 in der Aussenkontur des Aufnahmekörpers 1 bis zu einer zweiten Stirnseite 7 eines zweiten Aufnahmekörpers 1, der gegenüber dem ersten Aufnahmekörper 1 in einer parallel zu den Längsachsen beider Aufnahmekörper 1 verlaufenden Richtung zurückversetzt ist.

Bei dem in Fig. 3 dargestellten Nagelmagazin ragt jedes Befestigungselement 5 in Form einer Schraube mit ihrem Schaft 4 durch die Aufnahmeöffnung 2 jeweils eines Aufnahmekörpers 1. Die lichte Weite der Aufnahmeöffnung 2 ist erheblich grösser ausgebildet als der Aussendurchmesser des Schaftes 4 im Bereich der Gewindeflanken. Der den Schaft 4 radial stark überragende Kopf 3 des Befestigungselementes 5 liegt auf der zweiten Stirnseite 7 des entsprechenden Aufnahmekörpers 1 auf. Die axiale Festlegung des Befestigungselementes 5 an dem Trägerstreifen erfolgt mit den Rückhalteflächen 9 der Rückhalteelemente 8, die den Kopf 3 des Befestigungselementes 5 teilweise hintergreifen, wie dies in Fig. 4 dargestellt ist. Der Abstand L2 der Rückhaltefläche 9 von der zweiten Stirnseite entspricht im wesentlichen der Kopfhöhe des Befestigungselementes 5.

## Patentansprüche

1. Trägerstreifen mit mehreren jeweils eine Aufnahmeöffnung (2) aufweisenden, ringförmigen Aufnahmekörpern (1), die hintereinander angeordnet sowie miteinander verbunden sind und der Aufnahme jeweils eines einen Kopf (3) und einen Schaft (4) aufweisenden Befestigungselementes (5) dienen,
wobei je zwei einander benachbarte Aufnahmekörper (1) in einer parallel zu der Längsachse der Aufnahmeöffnung (2) verlaufenden Richtung zueinander versetzt angeordnet sind, **dadurch gekennzeichnet, dass** eine erste Stirnseite (6) jedes Aufnahmekörpers (1) auf einer ersten Seite (S1) des Trägerstreifens in einer Ebene (E) liegen, die zu den Längsachsen der Aufnahmeöffnungen (2) unter einem Winkel (W) von 60°bis 98° verläuft.

2. Trägerstreifen nach Anspruch 1, **dadurch gekennzeichnet, dass** der Versatz dem 0,02- bis 0,2-fachen Abstand zwischen den Längsachsen von zwei einander benachbarten Aufnahmekörpern (1) entspricht.

3. Tägerstreifen nach Anspruch 1 oder 2, **dadurch gekennzeichnet, dass** von einer der ersten Stirnseite (6) gegenüberliegenden zweiten Stirnseite (7) jedes Aufnahmekörpers (1) wenigstens ein Rückhalteelement (8) abragt, das eine von der zweiten Stirnseite (7) axial um den Abstand (L2) beabstandete, dieser zugewandte und in die Axialprojektion der lichten Weite der Aufnahmeöffnung (2) ragende Rückhaltefläche (9) aufweist.

4. Trägerstreifen nach Anspruch 3, **dadurch gekennzeichnet, dass** der Abstand (L2) dem 0,02- bis 0,2-fachen Abstand (L1) zwischen den Längsachsen von zwei einander benachbarten Aufnahmekörpern (1) entspricht.

5. Trägerstreifen nach Anspruch 3 oder 4, **dadurch gekennzeichnet, dass** zwei Rückhalteelemente (8) vorgesehen sind.

6. Trägerstreifen mit mehreren jeweils eine Aufnahmeöffnung (2) aufweisenden, ringförmigen Aufnahmekörpern (1), die hintereinander angeordnet sowie miteinander verbunden sind und der Aufnahme jeweils eines einen Kopf (3) und einen Schaft (4) aufweisenden Befestigungselementes (5) dienen,
wobei je zwei einander benachbarte Aufnahmekörper (1) in einer parallel zu der Längsachse der Aufnahmeöffnung (2) verlaufenden Richtung zueinander versetzt angeordnet sind, **dadurch gekennzeichnet, dass**
die Aufnahmekörper (1) im wesentlichen ovalförmig ausgebildet sind, wobei sich der grösste Durchmesser (D) in einer parallel zur Längserstreckung des Trägerstreifens verlaufenden Richtung erstreckt.

7. Trägerstreifen nach Anspruch 6, **dadurch gekennzeichnet, dass** der grösste Durchmesser (D) der Aufnahmekörper (1) grösser ist als der Abstand (L1) zwischen zwei Längsachsen benachbarter Aufnahmekörper (1).

8. Trägerstreifen nach einem der Ansprüche 3 bis 7, **dadurch gekennzeichnet, dass** sich im Verbindungsbereich zweier benachbarter Aufnahmekörper (1) von der zweiten Stirnseite (7) eines ersten Aufnahmekörpers (1) eine Ausnehmung bis zur zweiten Stirnseite (7) eines zweiten benachbarten Aufnahmekörpers (1) erstreckt, der gegenüber dem ersten Aufnahmekörper (1) in einer parallel zu den Längsachsen der Aufnahmeöffnungen (2) verlaufenden Richtung versetzt ist.

9. Nagelmagazin mit Trägerstreifen nach einem der Ansprüche 1 bis 8 und im Trägerstreifen gehalterten, einen Schaft (4) und einen Kopf (3) aufweisenden Befestigungselementen (5).

## Revendications

1. Bande porteuse avec plusieurs corps récepteurs annulaires (1) qui sont pourvus chacun d'un orifice récepteur (2), sont disposés les uns derrière les autres et reliés entre eux et servent à recevoir chacun un élément de fixation (5) comportant une tête (3) et une tige (4), deux corps récepteurs voisins l'un de l'autre (1) étant disposés à chaque fois avec un décalage mutuel dans une direction parallèle à l'axe longitudinal de l'orifice récepteur (2), **caractérisée en ce qu'**un premier côté frontal (6) de chaque corps récepteur (1) situé sur un premier côté (S1) de la bande porteuse se trouve dans un plan (E) qui s'étend selon un angle (W) de 60° à 98° par rapport aux axes longitudinaux des orifices récepteurs (2).

2. Bande porteuse selon la revendication 1, **caractérisée en ce que** le décalage correspond à 0,02 à 0,2 fois la distance entre les axes longitudinaux de deux corps récepteurs voisins l'un de l'autre (1).

3. Bande porteuse selon la revendication 1 ou 2, **caractérisée en ce que** d'un second côté frontal (7) de chaque corps récepteur (1) situé à l'opposé du premier côté frontal (6) dépasse au moins un élément de retenue (8) qui comporte une face de retenue (9), laquelle est distante axialement du second côté frontal (7) d'une valeur égale à la distance (L2), est tournée vers ce dernier et fait saillie dans la projection axiale de l'ouverture libre de l'orifice récepteur (2).

4. Bande porteuse selon la revendication 3, **caractérisée en ce que** la distance (L2) correspond à 0,02 à 0,2 fois la distance (L1) entre les axes longitudinaux de deux corps récepteurs voisins l'un de l'autre (1).

5. Bande porteuse selon la revendication 3 ou 4, **caractérisée en ce qu'**il est prévu deux éléments de retenue (8).

6. Bande porteuse avec plusieurs corps récepteurs annulaires (1) qui sont pourvus chacun d'un orifice récepteur (2), sont disposés les uns derrière les autres et reliés entre eux et servent à recevoir chacun un élément de fixation (5) comportant une tête (3) et une tige (4), deux corps récepteurs voisins l'un de l'autre (1) étant disposés à chaque fois avec un décalage mutuel dans une direction parallèle à l'axe longitudinal de l'orifice récepteur (2), **caractérisée en ce que** les corps récepteurs (1) sont sensiblement de forme ovale, le plus grand diamètre (D) s'étendant dans une direction parallèle à l'extension longitudinale de la bande porteuse.

7. Bande porteuse selon la revendication 6, **caractérisée en ce que** le plus grand diamètre (D) des corps récepteurs (1) est supérieur à la distance (L1) entre deux axes longitudinaux de corps récepteurs voisins (1) .

8. Bande porteuse selon une des revendications 3 à 7, **caractérisée en ce que** dans la zone de liaison de deux corps récepteurs voisins (1) s'étend, du second côté frontal (7) d'un premier corps récepteur (1) jusqu'au second côté frontal (7) d'un second corps récepteur voisin (1), un évidement qui est décalé par rapport au premier corps récepteur (1) dans une direction parallèle aux axes longitudinaux des orifices récepteurs (2).

9. Magasin de clous avec une bande porteuse selon une des revendications 1 à 8 et avec des éléments de fixation (5) pourvus d'une tige (4) et d'une tête (3) et retenus dans la bande porteuse.

## Claims

1. Carrier strip with a plurality of ring-shaped accommodating bodies (1), each having an accommodating opening (2), arranged one behind the other and connected to each other and which each serve to accommodate a fastening element (5) having a head (3) and a shaft (4), whereby each pair of mutually adjoining accommodating bodies (1) is arranged mutually offset in a direction running parallel to the longitudinal axis of the accommodating opening (2), **characterised in that** a first end face (6) of each accommodating body (1) on a first side (S1) of the carrier strip lies in a plane (E), which extends at an angle (W) in the range of 60° to 98° to the longitudinal axes of the accommodating openings (2).

2. Carrier strip according to claim 1, **characterised in that** the offset corresponds to an amount in the range of 0.02 to 0.2 times the distance between the longitudinal axes of two mutually adjoining accommodating bodies (1).

3. Carrier strip according to claim 1 or 2, **characterised in that** at least one restraining element (8) projects from a second end face (7) of each accommodating body (1) lying opposed to the first end face (6), said restraining element having a restraining surface (9) axially separated by the distance (L2) from the second end face (7), facing towards said second end face and projecting into the axial projection of the clear width of the accommodating opening (2).

4. Carrier strip according to claim 3, **characterised in that** the distance (L2) corresponds to an amount in the range of 0.02 to 0.2 times the distance (L1) between the longitudinal axes of two mutually adjoining accommodating bodies (1).

5. Carrier strip according to claim 3 or 4, **characterised in that** two restraining elements (8) are provided.

6. Carrier strip with a plurality of ring-shaped accommodating bodies (1), each having an accommodating opening (2), said accommodating bodies being arranged one behind the other and connected to each other and each serving to accommodate a fastening element (5) having a head (3) and a shaft (4), whereby in each case two mutually adjoining accommodating bodies (1) are arranged mutually offset in a direction running parallel to the longitudinal axis of the accommodating opening (2), **characterised in that** the accommodating bodies (1) are formed substantially oval-shaped, whereby the largest diameter (D) extends in a direction running parallel to the longitudinal extent of the carrier strip.

7. Carrier strip according to claim 6, **characterised in that** the largest diameter (D) of the accommodating bodies (1) is larger than the distance (L1) between two longitudinal axes of mutually adjoining accommodating bodies (1) .

8. Carrier strip according to one of the claims 3 to 7, **characterised in that** in the connecting region between two mutually adjoining accommodating bodies (1), a recess extends from the second end face (7) of a first accommodating body (1) as far as the second end face (7) of a second adjoining accommodating body (1), said second accommodating body being offset relative to the first accommodating body (1) in a direction running parallel to the longitudinal axes of the accommodating openings (2).

9. Nail magazine with carrier strips according to one of the claims 1 to 8 and fastening elements (5) having a shaft (4) and a head (3) which are held in the carrier strip.
